# EUROPÄISCHE PATENTSCHRIFT

(11) **EP 1 445 675 B1**
(45) Veröffentlichungstag und Bekanntmachung des Hinweises auf die Patenterteilung: **25.04.2012**
(21) Anmeldenummer: 04000205.7
(22) Anmeldetag: 08.01.2004
(51) Int. Cl.: G05B 19/042

(54) **Vorrichtung zur Zuweisung von Feldbusadressen**
Apparatus for allocation of field bus addresses
Dispositif d'attribution d'adresses de bus de terrain

(30) Priorität: 04.02.2003 DE 10304526
(43) Veröffentlichungstag der Anmeldung: 11.08.2004
(73) Patentinhaber: ABB AG, 68309 Mannheim (DE)
(72) Erfinder: Zank, Gunnar, Dipl.-Ing., 06179 Teutschenthal (DE); Gehrke, Horst, 69190 Walldorf (DE); Kalinski, Josef Robert, Dipl.-Ing., 68723 Oftersheim (DE); Garrels, Kai, Dipl.-Ing. (BA), 68239 Mannheim (DE)

(56) Entgegenhaltungen:
- DE-A1- 3 347 357
- DE-A1- 19 615 093
- DE-A1- 19 631 386
- JP-A- 2002 189 534

## Beschreibung

Die Erfindung betrifft eine Vorrichtung und ein Verfahren gemäß den Ansprüchen 1 und 6.

Schaltanlagen, insbesondere Niederspannungsschaltanlagen weisen Schaltgeräte oder Motorsteuergeräte zum Steuern und Überwachen eines oder mehrerer Verbraucher, beispielsweise eines Motors, auf. Die Schaltgeräte oder Motorsteuergeräte sind zusammen mit anderen Komponenten, wie beispielsweise Hauptschaltern und Schützen, in Einschübe eingebaut, wobei die Einschübe austauschbar sind.

Die Einschübe für die Schaltgeräte oder Motorsteuergeräte sind mit dem festen Teil der Schaltanlage vorzugsweise mit Steckverbindern, sogenannten Steuersteckern, verbunden, die so angeordnet sind, dass beim Einfahren des Einschubs in ein Einschubfach die Kontaktierung der Steuerstecker automatisch stattfindet.

Über die Steuerstecker sind die Einschübe an einen gemeinsamen Feldbus angeschlossen, über den ein Datenaustausch mit einem übergeordneten Leitsystem realisiert wird.

Jedes Schaltgerät oder Motorsteuergerät der Schaltanlage verfügt über eine Feldbusanschaltung, das heißt, über eine Kommunikationsschnittstelle, die den Datenaustausch des Schaltgerätes oder Motorsteuergerätes mit dem Feldbus steuert. Gegenwärtig wird die Zuweisung der Feldbusadressen an die Schaltgeräte oder Motorsteuergeräte im Einschub, mit der das Schaltgerät oder das Motorsteuergerät vom Leitsystem über den Feldbus angesprochen wird, dadurch realisiert, dass die Adresse im Schaltgerät oder Motorsteuergerät, insbesondere in einem internen Speicher, direkt gespeichert und somit dem Einschub zugeordnet, oder mittels eines Kodierschalters am Schaltgerät oder Motorsteuergerät eingestellt wird. Die Speicherung der Adressen im Schaltgerät ist beispielsweise in Allen-Bradley, "E3 and E3 Plus Overload Relays", Bulletins 193 and 592, User Manuel, Rockwell Automation (Februar 2001), Kapitel 4, Seite 69ff, beschrieben.

Eine weitere Möglichkeit zur Zuweisung der Feldbusadresse an das jeweilige Schaltgerät oder Motorsteuergerät ist die Speicherung der Feldbusadresse in einer vom Einschub getrennten Feldbusanschaltung, welche somit dem Steckplatz bzw. Einbauplatz zugeordnet ist. Dabei ist die Feldbusanschaltung über eine Datenleitung und einen Steuerstecker mit dem Einschub verbunden.

Beim Austausch eines Einschubes, beispielsweise zu Wartungs- und Reparaturzwecken, besteht die Gefahr, dass beim Wiedereinbau der Einschub an einem falschen Steckplatz eingeschoben wird und somit das Schaltgerät, welches sich im Einschub befindet, einem falschen Steckplatz zugeordnet wird. Dies hat zur Folge, dass die Verdrahtung zum Verbraucher nicht mit der Konfiguration des Einschubs zusammenpasst, beispielsweise wenn ein Einschub für einen polumschaltbaren Motor an einen Einbauplatz für einen Direktstarter eingeschoben wird.

Der Erfindung liegt die Aufgabe zugrunde, eine Vorrichtung und ein Verfahren zur Zuweisung von Feldbusadressen über den Einbauplatz von in Einschüben eingebauten Schaltgeräten oder Motorsteuergeräten einer Schaltanlage anzugeben, mit welcher beim Austausch der Einschübe der Schaltanlage eine falsche Zuordnung des Steckplatzes des Einschubes vermeidbar ist.

Diese Aufgabe wird durch eine Vorrichtung zur Zuweisung von Feldbusadressen über den Einbauplatz von in Einschüben eingebauten Schaltgeräten oder Motorsteuergeräten einer Schaltanlage, mit den im Anspruch 1 angegebenen Merkmalen gelöst.

Vorteilhafte Ausgestaltungen zur Zuweisung der Feldbusadressen über den Einbauplatz der die Schaltgeräte oder die Motorsteuergeräte aufnehmenden Einschübe sind in weiteren Ansprüchen angegeben.

Die Erfindung basiert darauf, dass die Feldbusadresse über den Steckplatz des Einschubes sowohl im Schaltgerät oder im Motorsteuergerät als auch in der in der Feldbusanschaltung abgelegt werden.

Nach dem Einbau eines neuen Einschubes werden die Adressen im Schaltgerät oder im Motorsteuergerät und in der Feldbusanschaltung überprüft. Ist dabei eine Übereinstimmung beider Adressen feststellbar, wird die Funktion des Schaltgerätes oder des Motorsteuergerätes gestartet.

Wird keine Übereinstimmung festgestellt, nimmt das Schaltgerät oder das Motorsteuergerät seine Funktion nicht auf, sondern zeigt eine Fehlermeldung an.

Durch die Erfindung wird das Wartungspersonal in vorteilhafter Weise in die Lage versetzt, den Einschub mit dem falschen Schaltgerät oder mit einem falschen Motorsteuergeräte zu erkennen, auszutauschen oder eine neue Konfiguration am Schaltgerät oder am Motorsteuergerät als gültig zu bestätigen sowie einzustellen. Von besonderem Vorteil ist, dass beim Austausch des Einschubes auf diese Weise eine falsche Zuordnung des Steckplatzes des Einschubes nicht mehr gegeben ist.

Anhand von in der Zeichnungsfigur 1 dargestellten Ausführungsbeispieles sollen die Eindung sowie vorteilhafte Ausgestaltungen und Verbesserungen der Erfindung näher erläutert und beschrieben werden.

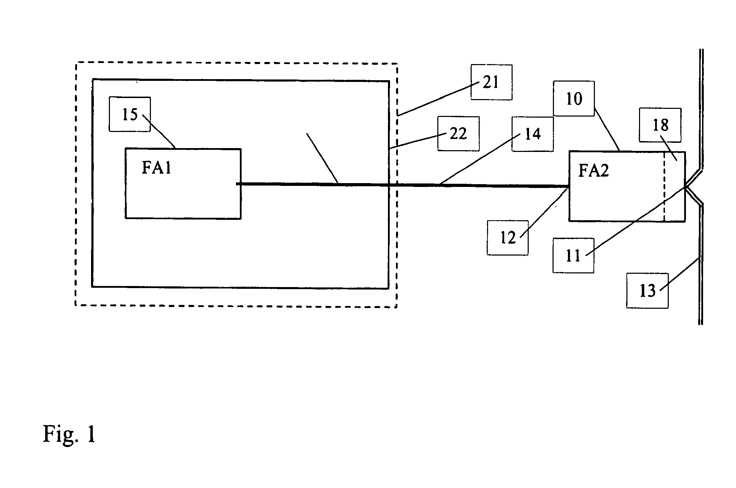

Es zeigt die einzige Fig. 1 den Anschluss eines Schaltgeräts oder eines Motorsteuergerätes 15 mittels einer Feldbusanschaltung 10 an einen Feldbus 13. Das Schaltgerät oder das Motorsteuergerät 15 ist in einem Einschub 22 eines Einschubfaches 21 einer Schaltanlage eingebaut. Die elektrische Verbindung zwischen dem Schaltgerät oder dem Motorsteuergerät 15 und einer Kommunikationsschnittstelle 12 der Feldbusanschaltung 10 wird über eine Datenleitung 14 realisiert.

Die Feldbusanschaltung 10 weist eine Feldbusschnittstelle 11 auf, die mit dem Feldbus 13 verbunden ist, wobei die Feldbusschnittstelle 11 dabei beispielsweise auf einem auswechselbaren Schnittstellenmodul 18 angeordnet ist.

Im Schaltgerät oder im Motorsteuergerät 15 ist eine erste Feldbusadresse FA1 abgelegt, welche Informationen über den Steckplatz des Einschubes 22 enthält.

In der Feldbusanschaltung 10 ist eine zweite Feldbusadresse FA2 abgelegt, welche ebenfalls Informationen über die Zuordnung zu einem Steckplatz des Einschubes 22 enthält, womit der Feldbusanschaltung 10 ein definierter Steckplatz zugeordnet ist.

Wird nun der Einschub 22 mit dem zugehörigen Schaltgerät oder Motorsteuergerät 15 ausgetauscht, werden die Adressen FA1 und FA2 im Schaltgerät oder im Motorsteuergerät 15 und in der Feldbusanschaltung 10 überprüft. Ist dabei eine Übereinstimmung der ersten Adresse FA1 und mit der zweiten Adresse FA2 feststellbar, wird die Funktion des Schaltgerätes oder des Motorsteuergerätes 15 gestartet und gegebenenfalls eine Bestätigung angezeigt.

Wird keine Übereinstimmung der ersten Adresse FA1 mit der zweiten Adresse FA2 festgestellt, nimmt das Schaltgerät oder das Motorsteuergerät 15 seine Funktion nicht auf, sondern zeigt eine Fehlermeldung an.

Die Erfindung ermöglicht in vorteilhafter Weise, dass nach dem Erkennen eines fehlerhaften Einbaus eines Einschubes der fehlerhafte Einschub mit dem darin eingebauten Schaltgerät oder Motorsteuergerät austauschbar ist oder eine neue Konfiguration am Schaltgerät oder am Motorsteuergerät als gültig zu bestätigen sowie einzustellen ist.

Mit dem oben beschriebenen Aufbau der erfindungsgemäßen Vorrichtung ist somit sichergestellt, dass beim Wiedereinbau eines Einschubs, beispielsweise nach Wartungs- und Reparaturarbeiten, der Einbauplatz des Einschubes überprüft wird und bei Vorliegen eines falschen Einbauplatzes eine Meldung angezeigt wird. Damit wird erreicht, dass die Verdrahtung zum Verbraucher mit der Konfiguration des Einschubs überprüft wird.

## Patentansprüche

1. Vorrichtung zur Zuweisung von Feldbusadressen über die Einbauplätze von in Einschüben (22) eingebauten Geräten (15) einer Schaltanlage, wobei die jeweiligen Einschübe (22) über jeweils eine Datenleitung (14) und über jeweils eine Feldbusanschaltung (10) mit einem Feldbus (13) verbuden sind, über den ein Datenaustausch mit einem übergeordneten Leitsystem realisierbar ist, **dadurch gekennzeichnet, dass** in dem jeweiligen Gerät (15) oder in dem jeweiligen Einschub (22) eine erste Adresse (FA1) und in der dem jeweiligen Gerät oder Einschub zugeordneten Feldbusanschaltung (10) eine zweite Adresse (FA2) mit Informationen über die Steckplätze des jeweiligen Gerätes (15) oder Einschubes (22) abgelegt sind, und dass die Vorrichtung angepaßt ist, eine Überprüfung der ersten Adresse (FA1) des jeweiligen Gerätes (15) mit der diesem Gerät (15) zugeordneten zweiten Adresse (FA2) der Feldbusanschaltung (10) auf Übereinstimmung durchzuführen.

2. Vorrichtung nach Anspruch 1, **dadurch gekennzeichnet, dass** bei Übereinstimmung der ersten Adresse (FA1) mit der zweiten Adresse (FA2) die Funktion des Gerätes (15) ausführbar ist.

3. Vorrichtung nach einem der vorherigen Ansprüche **dadurch gekennzeichnet, dass** bei Nichtübereinstimmung der ersten Adresse (FA1) mit der zweiten Adresse (FA2) die Funktion des Gerätes (15) nicht ausführbar ist.

4. Vorrichtung nach einem der vorherigen Ansprüche **dadurch gekennzeichnet, dass** eine Nichtübereinstimmung der ersten Adresse (FA1) mit der zweiten Adresse (FA2) zur Anzeige einer Meldung führt, wobei die Meldung anzeigt, dass ein falsches Gerät (15) eingesetzt ist, das Gerät (15) auszutauschen ist, eine neue Konfiguration am Gerät (15) als gültig zu bestätigen und/oder eine neue Konfiguration am Gerät (15) einzustellen ist.

5. Vorrichtung nach einem der vorherigen Ansprüche **dadurch gekennzeichnet, dass** das Gerät (15) ein Schaltgerät oder ein Motorsteuergerät einer Niederspannungsschaltanlage ist.

6. Verfahren zur Zuweisung von Feldbusadressen über die Einbauplätze von in Einschüben (22) eingebauten Geräten (15) einer Schaltanlage, wobei die jeweiligen Einschübe (22) über jeweils eine Datenleitung (14) und über jeweils eine Feldbusanschaltung (10) mit einem Feldbus (13) verbunden sind, über den ein Datenaustausch mit einem übergeordneten Leitsystem realisiert wird, **dadurch gekennzeichnet, dass**
- in dem jeweiligen Gerät (15) oder in dem jeweiligen Einschub (22) eine erste Adresse (FA1) mit Informationen über die Steckplätze des jeweiligen Gerätes (15) oder des Einschubes (22) abgelegt wird,
- in der dem jeweiligen Gerät oder Einschub zugeordneten Feldbusanschaltung (10) eine zweite Adresse (FA2) mit Informationen über die Steckplätze des jeweiligen Gerätes (15) oder Einschubes (22) abgelegt wird, und
- eine Überprüfung auf Übereinstimmung der erste Adresse (FA1) mit der zweiten Adresse (FA2) durchgeführt wird.

7. Verfahren nach Anspruch 6 **dadurch gekennzeichnet, dass** bei Übereinstimmung der ersten Adresse (FA1) mit der zweiten Adresse (FA2) die Funktion des Gerätes (15) ausgeführt wird.

8. Verfahren nach Anspruch 6 order 7 **dadurch gekennzeichnet, dass** bei Nichtübereinstimmung der ersten Adresse (FA1) mit der zweiten Adresse (FA2) die Funktion des Gerätes (15) nicht ausgeführt wird.

9. Verfahren nach einem der Ansprüche 6 bis 8, **dadurch gekennzeichnet, dass** bei Nichtübereinstimmung der ersten Adresse (FA1) mit der zweiten Adresse (FA2) eine Meldung angezeigt wird, dass ein falsches Gerät (15) vorhanden ist, so dass das Gerät (15) ausgetauscht, eine neue Konfiguration am Gerät (15), als gültig bestätigt und/oder eine neue Konfiguration am Gerät (15) eingestellt werden kann.

## Claims

1. Apparatus for allocation of field bus addresses via the installation spaces of devices (15), which are installed in racks (22), in a switchgear assembly, the respective racks (22) being connected via in each case one data line (14) and via in each case one field bus connection (10) to a field bus (13) via which data can be interchanged with a superordinate control system, **characterized in that** a first address (FA1) is stored in the respective device (15) or in the respective rack (22) and a second address (FA2) is stored in the field bus connection (10) associated with the respective device or rack, with information relating to the plug-in spaces of the respective device (15) or rack (22), and **in that** the apparatus is adapted to carry out a check for a match between the first address (FA1) of the respective device (15) and the second address (FA2) which is associated with this device (15), of the field bus connection (10).

2. Apparatus according to Claim 1, **characterized in that** the function of the device (15) can be carried out if the first address (FA1) matches the second address (FA2).

3. Apparatus according to one of the preceding claims, **characterized in that** the function of the device (15) cannot be carried out if the first address (FA1) does not match the second address (FA2).

4. Apparatus according to one of the preceding claims, **characterized in that** a failure of the first address (FA1) to match the second address (FA2) leads to indication of a message, with the message indicating that an incorrect device (15) has been inserted, the device (15) must be replaced, a new configuration on the device (15) must be confirmed as being valid, and/or a new configuration must be set on the device (15).

5. Apparatus according to one of the preceding claims, **characterized in that** the device (15) is a switching device, or a motor controller of a low-voltage switchgear assembly.

6. Method for allocation of field bus addresses via the installation spaces of devices (15), which are installed in racks (22), in a switchgear assembly, the respective racks (22) being connected via in each case one data line (14) and via in each case one field bus connection (10) to a field bus (13) via which data is interchanged with a superordinate control system, **characterized in that**
- a first address (FA1) is stored in the respective device (15) or in the respective rack (22) with information relating to the plug-in spaces of the respective device (15) or the rack (22),
- a second address (FA2) is stored in the field bus connection (10), which is associated with the respective device or rack, with information relating to the plug-in spaces of the respective device (15) or rack (22), and
- a check is carried out to determine whether the first address (FA1) matches the second address (FA2).

7. Method according to Claim 6, **characterized in that** the function of the device (15) is carried out if the first address (FA1) matches the second address (FA2).

8. Method according to Claim 6 or 7, **characterized in that** the function of the device (15) is not carried out if the first address (FA1) does not match the second address (FA2).

9. Method according to one of Claims 6 to 8, **characterized in that** if the first address (FA1) does not match the second address (FA2), a message is indicated that an incorrect device (15) is present, so that the device (15) can be replaced, a new configuration on the device (15) can be confirmed as being valid, and/or a new configuration can be set on the device (15).

## Revendications

1. Dispositif d'attribution d'adresses de bus de terrain à des emplacements d'insertion d'appareils (15) insérés dans des tiroirs (22) d'une installation de commutation, les tiroirs respectifs (22) étant reliés par l'intermédiaire d'une ligne de données respective (14) et par l'intermédiaire d'une interface de connexion de bus de terrain respective (10) à un bus de terrain (13), par l'intermédiaire duquel un échange de données peut être réalisé avec un système de commande de niveau supérieur, **caractérisé en ce que** des informations concernant l'emplacement d'insertion de l'appareil (15) ou du tiroir (22) respectif sont stockées dans l'appareil respectif (15) ou dans le tiroir respectif (22), à une première adresse (FA1) et, dans l'interface de connexion de bus de terrain (10) affectée à l'appareil ou au tiroir respectif, à une seconde adresse (FA2), et **en ce que** le dispositif est apte à effectuer une vérification de concordance entre la première adresse (FA1) de l'appareil respectif (15) et la seconde adresse (FA2) attribuée à cet appareil (15) dans l'interface de connexion de bus de terrain (10).

2. Dispositif selon la revendication 1, **caractérisé en ce que** la fonction de l'appareil (15) peut être mise en oeuvre lors d'une concordance entre la première adresse (FA1) et la seconde adresse (FA2).

3. Dispositif selon l'une quelconque des revendications précédentes, **caractérisé en ce que** la fonction de l'appareil (15) ne peut pas être mise en oeuvre lors d'une non-concordance entre la première adresse (FA1) et la seconde adresse (FA2).

4. Dispositif selon l'une quelconque des revendications précédentes, **caractérisé en ce qu'**une non-concordance entre la première adresse (FA1) et la seconde adresse (FA2) conduit à l'affichage d'un message indiquant qu'un appareil (15) incorrect a été inséré, que l'appareil (15) doit être remplacé, qu'une nouvelle configuration doit être confirmée comme étant valide dans l'appareil (15) et/ou qu'une nouvelle configuration doit être chargée dans l'appareil (15).

5. Dispositif selon l'une quelconque des revendications précédentes, **caractérisé en ce que** l'appareil (15) est un appareil de commutation ou un appareil de commande de moteur d'une installation de commutation à basse tension.

6. Procédé d'attribution d'adresses de bus de terrain à des emplacements d'insertion d'appareils (15) insérés dans des tiroirs (22) d'une installation de commutation, les tiroirs respectifs (22) étant reliés par l'intermédiaire d'une ligne de données respective (14) et par l'intermédiaire d'une interface de connexion de bus de terrain respective (10) à un bus de terrain (13), par l'intermédiaire duquel un échange de données est réalisé avec un système de commande de niveau supérieur, **caractérisé en ce que**
- des informations concernant les emplacements d'insertion de l'appareil (15) ou du tiroir (22) respectif sont stockées, dans le dispositif respectif (15) ou dans le tiroir respectif (22), à une première adresse (FA1),
- des informations concernant les emplacements d'insertion de l'appareil (15) ou du tiroir (22) respectif sont stockées, dans l'interface de connexion de bus de terrain (10) associée au dispositif ou au tiroir respectif, à une seconde adresse (FA2), et
- une vérification de la concordance entre la première adresse (FA1) et la seconde adresse (FA2) est effectuée.

7. Procédé selon la revendication 6, **caractérisé en ce que** la fonction de l'appareil (15) est mise en oeuvre lors d'une concordance entre la première adresse (FA1) et la seconde adresse (FA2).

8. Procédé selon la revendication 6 ou 7, **caractérisé en ce que** la fonction de l'appareil (15) n'est pas mise en oeuvre lors d'une non-concordance entre la première adresse (FA1) et la seconde adresse (FA2).

9. Procédé selon l'une quelconque des revendications 6 à 8, **caractérisé en ce qu'**un message est affiché lors d'une non-concordance entre la première adresse (FA1) et la seconde adresse (FA2), indiquant qu'un appareil incorrect (15) est présent afin de pouvoir remplacer l'appareil (15), confirmer qu'une nouvelle configuration est valide dans l'appareil (15) et/ou charger une nouvelle configuration dans l'appareil (15).
